# EUROPEAN PATENT SPECIFICATION

(11) **EP 2 387 805 B1**
(45) Date of publication and mention of the grant of the patent: **21.06.2017**
(21) Application number: 10700837.7
(22) Date of filing: 08.01.2010
(51) Int. Cl.: H01M 4/66, H01M 4/04, H01M 4/133, H01M 4/1393, B82Y 30/00, B82Y 40/00, H01G 11/36, H01M 2/16, H01M 10/0525, H01M 10/0565, H01M 10/0587, H01M 2/18, H01M 4/587

(54) **A PROCESS FOR PRODUCING CARBON NANOSTRUCTURE ON A FLEXIBLE SUBSTRATE, AND ENERGY STORAGE DEVICES COMPRISING FLEXIBLE CARBON NANOSTRUCTURE ELECTRODES**
VERFAHREN ZUR HERSTELLUNG KOHLENSTOFFNANOSTRUKTUREN AUF EINEM FLEXIBLEN SUBSTRAT UND ENERGIESPEICHER MIT FLEXIBLEN KOHLENSTOFFNANOSTRUKTUR-ELEKTRODEN
PROCÉDÉ DE FABRICATION DES NANOSTRUCTURES DE CARBONE SUR UN SUBSTRAT FLEXIBLE, ET UN DISPOSITIF DE STOCKAGE D'ÉNERGIE AVEC ELECTRODES FLEXIBLES DES NANOSTRUCTURES DE CARBONE

(30) Priority: 13.01.2009 US 319933
(43) Date of publication of application: 23.11.2011
(73) Proprietor: Nokia Technologies Oy, 02610 Espoo (FI)
(72) Inventor: UNALAN, Husnu Emrah, 06530 Ankara (TR); RUPESINGHE, Nalin Lalith, Cambridge Cambridgeshire CB4 3NB (GB); AMARATUNGA, Gehan, Cambridge Cambridgeshire CB2 8RW (GB)
(74) Representative: Higgin, Paul
(86) International application number: PCT/EP2010/050165
(87) International publication number: WO 2010/081769

(56) References cited:
- WO-A1-2004/000728
- WO-A1-2005/069412
- WO-A2-2007/131217
- US-A1- 2008 131 779

## Description

### DISCLOSURE OF JOINT RESEARCH AGREEMENT

The claimed invention was made under a joint research agreement between Nokia Corporation, Finland, and University of Cambridge, United Kingdom. The joint research agreement was in effect before the date the claimed invention was made, and the claimed invention was made as a result of activities undertaken within the scope of the joint research agreement.

### TECHNICAL FIELD

This disclosure relates to a process for producing carbon nanostructure, especially carbon nanotubes, on a flexible metallic substrate. Also the disclosure relates to energy conversion and storage devices, such as batteries and supercapacitors, having charge collectors made with the carbon nanotubes grown on the flexible substrate.

### BACKGROUND ART

The ever-increasing demand for portable electronic devices motivates technological improvements in energy conversion and storage units, such as batteries, used in these devices. In developing the energy conversion and storage units, lightweight construction, long lifetime, high power density and flexibility to meet various design and power needs are important factors to consider. Examples of the energy conversion and storage units suitable for portable electronic devices include lithium ion batteries, lithium metal batteries, supercapacitors, etc.

Lithium ion batteries are currently one of the most popular types of solid-state batteries for portable electronic devices, with one of the best energy-to-weight ratios, no memory effect, and a slow loss of charge when not in use. The three primary functional components of a lithium ion battery are anode, cathode and electrolyte, for which a variety of materials may be used. Commercially, the most popular material for the anode is graphite. The cathode may be made with an intercalation lithium compound such as lithium cobalt oxide, lithium iron phosphate, lithium manganese oxide, etc.

Lithium metal batteries, or lithium metal polymer batteries, are rechargeable batteries that evolved from lithium-ion batteries. A lithium-metal battery structure comprises a lithium metal anode, a polymer composite electrolyte and a cathode. Lithium metal batteries can be produced by stacking thin films of these materials together. The resulting device structure is flexible, tough, and durable. The advantages of lithium metal polymer structure over the traditional lithium ion design include lower cost of manufacturing and being more robust to physical damage.

Supercapacitors resemble a regular capacitor with the exception that it offers very high capacitance in a small package. Energy storage is by means of static charge rather than of an electro-chemical process that is inherent to the batteries. Applying a voltage differential on the positive and negative plates charges the supercapacitor. Whereas a regular capacitor consists of conductive foils and a dry separator, the supercapacitor crosses into battery technology by using electrodes and electrolyte that are similar to lithium ion/lithium metal batteries. Hence, a combination of battery and supercapacitor is of great interest for achieving high energy density and power density. For enhanced charge storage capacity, electrode materials suitable for the battery/supercapacitor combination should have a high surface area.

Recently, nanostructured materials are being used in rechargeable batteries. Nanostructured carbon, such as carbon nanotubes, carbon nanowires, carbon nanohorns and carbon nano-onions are being contemplated for replacing graphite. In the description that follows, carbon nanotube (CNT) is selected as a specific example of the nanostructured materials. However, it is to be understood that the scope of the disclosure is not limited by any specific substance in any particular examples or embodiments. Schindall (WO2007/131217) relates to a nanostructure which comprises electrically conducting plates. The conducting plates comprise metals such as aluminium coated with a multi-layer structure. The multi-layer structure may comprise layers such as an aluminium layer, an alumina layer and an iron layer. Carbon nanotubes extend from the conducting plates towards a separator which is disposed between the plates. An electrolyte is also disposed between the plates.

CNT is a highly crystallized tubular structure of carbon. One single nanotube is about a few nanometers in diameter and up to a hundred micrometers (microns) long. Millions of nanotubes together may form a cluster of macroscopic material that is practically useful. CNTs have several important properties, including high mechanical strength, high electrical conductivity, high thermal conductivity, being able to carry high current densities, chemically resistant to attacks by strong acids or alkali, and, collectively, extremely high surface area.

CNTs may be grown from a smooth substrate to form a layer of densely packed, vertically aligned CNT pile (morphologically similar to a pile of fiber on a carpet). Such a well-arranged nanostructure has an extremely high surface area. Used in batteries or supercapacitors, the CNT layer can store significantly more electrical charge (e.g. lithium ions) than those electrodes made with conventional materials such as graphite. The use of the CNT technology not only enables the energy storage unit to provide long and stable power as in a conventional battery, but also enables the quick burst of high energy that is typical of a supercapacitor.

In this disclosure, a process for producing highly packed and vertically aligned CNT structure on a flexible substrate is described. The flexible CNT structure thus resulted can be directly used in making batteries and supercapacitors. The process is suitable for mass productions of the nanostructured carbon material and mass production of the energy storage units comprising the nanostructured carbon material.

### SUMMARY OF THE INVENTION

According to various, but not necessarily all, embodiments of the invention, there is provided a device as claimed in claim 1.

According to various, but not necessarily all, embodiments of the invention, there is provided a method as claimed in claim 11.

In a first aspect of the invention, a device structure is provided. The device structure comprises a first sheet of a conductive material; a sheet of a substance disposed on the first sheet of the conductive material, the substance being able to conduct free ions therein; and a second sheet of same or different conductive material disposed on the sheet of the substance. At least one of the first sheet and second sheet comprises a metal foil layer and a carbon nanotube layer, the carbon nanotube layer being arranged to face the sheet of the substance. The carbon nanotube layer is directly grown on the metal foil layer.

In the device, the first sheet, the sheet of the substance and the second sheet may form a multi-layered stack, and the device may further comprise a first insulating sheet and a second insulating sheet disposed on outer surfaces of the multi-layered stack, respectively.

The device may have much larger width and length than thickness. The device may be rolled up or folded and then hermetically sealed to form an energy storage unit. The energy storage unit may be a rechargeable battery or a capacitor, and the first and the second conductive sheets are configured to engage with an external energy source or drain.

In the device, the metal foil may be one of the following: aluminum, copper, iron, and alloys of aluminum, copper or iron. The metal foil may have a thickness of 5 to 100 micrometers (microns).

The carbon nanotube layer is directly grown on the metal foil by a process that comprises; coating a catalyst on a surface of the metal foil by low temperature evaporation of the catalyst; annealing the catalyst coated metal foil in ammonia gas at a first temperature; and growing the carbon nanotubes directly on the catalyst coated surface of the metal foil in a hydrocarbon gas atmosphere at a second temperature. The first temperature is lower than the second temperature and the second temperature is no higher than 550[deg.] C.

In the device, the sheet of the substance may comprise a sheet of microperforated plastic film and an electrolyte disposed on surfaces of the plastic film. The microperforated plastic film may be a membrane made of polyethylene (PE)-polypropylene (PP). The electrolyte may a composite of a lithium salt and one of the following polymers: ethylene carbonate (EC), diethylene carbonate (DC) and propylene carbonate (PC). Alternatively, the electrolyte may be a room temperature ionic liquid electrolyte. The room temperature ionic liquid electrolyte may comprise 1-butyl, 3-methylimidazolium chloride ([BMIM] [Cl]), 1-25% of cellulose and a lithium salt.

The carbon nanotubes in the carbon nanotube layer are at least partially aligned in a direction. The direction may be at least nearly perpendicular to the surface of the metal foil.

In a second aspect of the invention, a process for forming a layer of carbon nanotubes on a flexible metal foil is provided. The process comprises coating a catalyst on a surface of the metal foil by low temperature evaporation of the catalyst; annealing the catalyst coated metal foil in ammonia gas at a first temperature; and growing the carbon nanotubes directly on the catalyst coated surface of the metal foil in a hydrocarbon gas atmosphere at a second temperature. The first temperature is lower than the second temperature and the second temperature is no higher than 550[deg.] C.

In the process, the metal foil may be one of the following: aluminum, copper, iron, and alloys of aluminum, copper or iron. The metal foil may have a thickness of 5 to 100 micrometers (microns). The catalyst may comprise one of the following: iron, nickel and cobalt.

The catalyst may have a particle size of no more than 50 nanometers. The carbon nanotubes may be grown to a length of 10 to 100 micrometers (microns). The carbon nanotubes grown on the metal foil may be at least partially aligned in a direction. The direction may be at least nearly perpendicular to the surface of the metal foil, The process is carried out in a chemical vapor deposition system.

In a third aspect of the invention, a method is provided. The method comprises providing a first sheet of a conductive material; disposing a sheet of a substance on the first sheet of the conductive material, the substance being able to conduct free ions therein; and disposing a second sheet of same or different conductive material on the sheet of the substance. At least one of the first sheet and the second sheet comprises a metal foil layer and a carbon nanotube layer, the carbon nanotube layer being arranged to face the sheet of the substance. The carbon nanotube layer is directly grown on the metal foil layer.

The first sheet, the sheet of the substance and the second sheet may form a multi-layered stack, and the method further comprises disposing a first insulating sheet and a second insulating sheet on outer surfaces of the multi-layered stack, respectively. The multi-layered stack may have much larger width and length than thickness, and the method further comprises rolling up or folding the multi-layered stack; and hermetically. sealing the rolled-up or folded multi-layered stack to form an energy storage unit. The energy storage unit may be a rechargeable battery or a capacitor, and the first and the second conductive sheets are configured to engage with an external energy source or drain.

In the method above, the carbon nanotube layer may be grown directly on the metal foil layer by a process that comprises: coating a catalyst on a surface of the metal foil by low temperature evaporation of the catalyst; annealing the catalyst coated metal foil in ammonia gas at a first temperature; and growing the carbon nanotubes directly on the catalyst coated surface of the metal foil in a hydrocarbon gas atmosphere at a second temperature. The first temperature is lower than the second temperature and the second temperature is no higher than 550°C. The process for growing the carbon nanotube layer may be carried out in a chemical vapor deposition system.

### BRIEF DESCRIPTION OF THE DRAWINGS

The features and advantages of the invention will become apparent from a consideration of the subsequent detailed description presented in connection with accompanying drawings, in which:
Figure 1 is a schematic illustration of a layer of aligned CNTs grown on a flexible metal foil;
Figure 2 is a Raman scattering spectrum of the CNTs grown on an Al foil;
Figure 3 is a schematic illustration of a thin film energy storage device structure;
Figures 4a and 4b illustrate the charging and discharging mechanisms of a lithium ion battery, in which the anode comprises CNT nanostructure;
Figure 5 is a schematic illustration a lithium metal battery in which the cathode comprises CNT nanostructure;
Figure 6 is a schematic illustration of a supercapacitor in which one or both of the electrodes comprise CNT nanostructure;
Figure 7 is an example of a thin film lithium metal/lithium ion battery core that is produced by rolling a multi layered thin film stack; and
Figure 8 is cyclic voltammetry data of a supercapacitor made with CNTs grown on flexible Al foil compared with that made with graphite.

### DETAILED DESCRIPTION

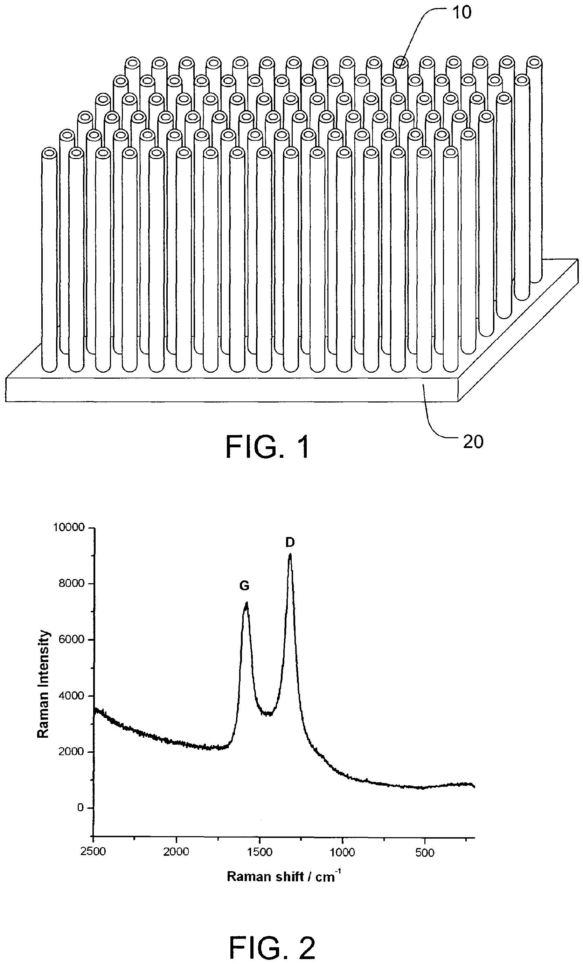

Fig. 1 shows, schematically, a sheet of densely packed, vertically aligned carbon nanotubes 10 grown on a metal foil substrate 20. For achieving a maximum surface area, ideally a CNT sheet should have CNTs densely packed (one nanotube next to another with gaps between the nanotubes about the same size as the Li ion) and aligned perpendicular or nearly perpendicular to the surface of the substrate. Preferably, the carbon nanotubes are multiwalled carbon nanotubes. By directly growing the CNTs on a flexible conductive substrate, the CNTs do not have to be removed from the substrate for the applications, and the substrate can be directly used in those energy storage devices where the components thereof must be folded or rolled for minimizing the overall volume of the devices. This not only simplifies the manufacturing procedure but also makes it more cost effective.

The growth of the CNTs on the substrate is preferably carried out by a low temperature plasma enhanced chemical vapor deposition (PECVD) method. The deposition process utilizes nanoparticles of a metal catalyst to react with a hydrocarbon gas. In the deposition process, the catalyst decomposes the hydrocarbon gas to produce carbon and hydrogen. The carbon dissolves into the particle and precipitates out from its circumference as the carbon nanotube. Thus, the catalyst acts as a 'template' from which the carbon nanotube is formed, and by controlling the catalyst particle size and reaction time, one can tailor the nanotube diameter and length respectively to suit. CNTs, in contrast to solid carbon nanowires, tend to form when the catalyst particle is ∼50 nm or less.

Typically, the CVD growth temperature is higher than 700°C, which prohibits the use of many thin and flexible substrates. In the present invention, aligned carbon nanotubes are grown directly on thin and flexible metal foils at a temperature no higher than 550°C.

A metal foil is cut to size and cleaned consecutively by acetone and by isopropanol in an ultrasonic bath for 5 minutes each, followed by rinsing with de-ionized water and drying in a nitrogen flow. The metal foil may be made of various metals or alloys such as Al, Cu or stainless steel, preferably Al or Cu. Conventional metal foils can be manufactured by various methods known in the art, so normally these foils are commercially available. The thickness of the metal foil can be from 5 to 100 µm so long as it has sufficient mechanical strength and desired flexibility. Impurities in the metal foil should be sufficiently low so that they do not inhibit the CNT growth and contaminate the growth equipment.

Before the CNT growth, a layer of the catalyst is deposited on the surface of the substrate by low temperature evaporation technique in a DC sputtering system (e.g. at a base pressure of 2.1×10⁻⁶ atm, 20 sccms of argon flow with 50W plasma power for 20 seconds). The thickness of the catalyst layer is less than 5 nanometers. Suitable catalysts include iron (Fe), nickel (Ni) and cobalt (Co). CNT growth is carried out in a quartz vacuum chamber of a chemical vapor deposition (CVD) system. One example of a commercially available CVD system is Aixtron Nanoinstruments Plasma Enhanced Chemical Vapor Deposition system. One or more catalyst-coated substrates are placed on a resistively heated graphite stage in the quartz chamber. Growth temperature is controlled by a thermocouple attached to the surface of the graphite stage. The metal foil substrates are heated up in an ammonia gas (NH₃) atmosphere to 450°C and annealed at 450°C for a predetermined period.

After the annealing, the temperature of the graphite stage is ramped up to 520°C (for Al foil) or to 540°C (for Cu foil) and acetylene (C₂H₂) was supplied as the carbon feedstock for the CNT growth. After the CNTs have grown to the desired length, the substrates are cooled to room temperature. Nitrogen gas (N₂) was supplied at the end of the growth. It is observed that 15 minutes of growth time may yield 30 to 40 µm long CNTs on an Al foil and 70-80 µm long CNTs on a Cu foil.

The as-grown CNT samples are then inspected by a Raman scattering spectroscopy. Figure 2 shows a Raman scattering spectrum of the CNTs grown on an Al foil. The multiwalled nanotube structure is confirmed by the D and G bands in the spectrum.

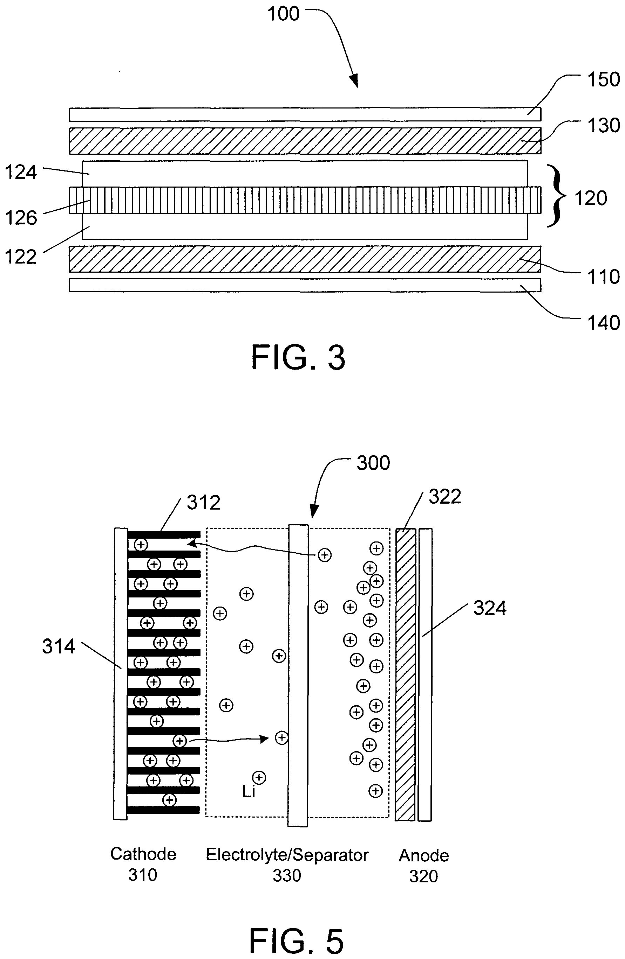

Referring now to Fig. 3, a basic structure of a multi-layered energy storage device **100** comprises a first sheet of a conductive material **110**, a sheet of a free ion conductive electrolyte/separator **120** disposed on the first sheet of the conductive material **110**, and a second sheet of same or different conductive material **130** disposed on the sheet of the electrolyte **120**. The first sheet **110**, the sheet of the electrolyte **120** and the second sheet **130** form a basic multi-layered stack. The first and the second conductive sheets **110** and **130** are used as electrodes (anode and cathode, respectively).

The sheet of the electrolyte **120** may have different constructions. One example is that it comprises a separator layer **126**. The separator **126** may be a thin sheet of micro-perforated plastic such as a polymer-based membrane, e.g. a 25 µm thick polyethylene (PE) - polypropylene (PP) (trade name CELGARD), or any suitable material such as paper. As the name implies, the separator is an ionic conductor but electric insulator that separates the first and the second conductive sheets while allowing the free ions to pass through. The separator **126** may further filled with or applied thereon an electrolyte (electrolyte layers **122** and **124** on both surfaces of the separator layer **126** are shown). An electrolyte is any substance containing free ions that behaves as an electrically conductive medium. Besides conventional organic electrolytes such as ethylene carbonate (EC), diethylene carbonate (DC) and propylene carbonate (PC), a room temperature ionic liquid (RTIL) electrolyte, for example, 1-butyl, 3-methylimidazolium chloride ([BMIM][Cl]) composing of 1-25% cellulose and a lithium salt, can be preferably used as a gel electrolyte for the fabrication of a fully solid state rechargeable battery. The RTIL gels are non-flammable, flexible and environmentally safe.

The first conductive sheet **110** and/or the second conductive sheet **130** may further comprise a metal foil base layer (acting as a charge collector) and a charge storage or charge supply layer. The charge storages layer may be composed of the carbon nanotube structure and it may be grown on the base layer as shown in Fig. 1. The charge supply layer may be composed of a compound, such as a lithium metal oxide, or lithium metal, depending on the type of the device. In the device structure, the charge storage layer and charge supply layer face the electrolyte layer **120**. The device structure **100** further comprises a first insulator sheet **140** and a second insulator sheet **150** disposed on outer surfaces of the multiplayer stack.

Following is a brief description of various energy storage devices according to the present invention.

### 1. Lithium ion battery structure

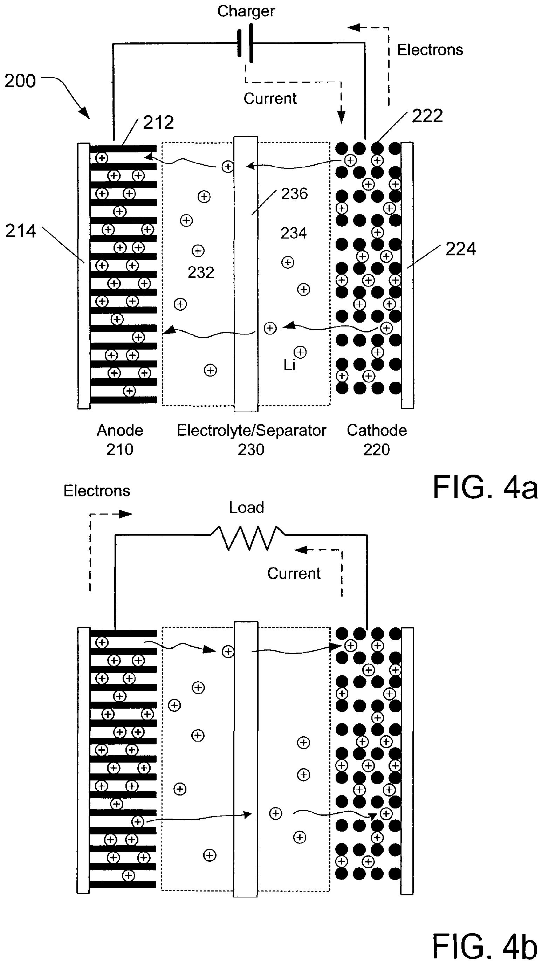

Figures 4a and 4b show respectively the charge and discharge mechanisms of a lithium ion battery **200** according to the present invention. Inside the battery **200**, the anode **210** (negative electrode) is made of a CNT layer **212** directly grown on a metal foil substrate **214**, and the cathode **220** (positive electrode) is made of a lithium metal oxide layer **222** and a metal foil charge collector layer **224**. Examples of lithium metal oxide include lithium cobalt oxide (LiCoO₂), lithium manganese oxide (LiMnO₄) and lithium nickel oxide (LiNiO₂). A more advanced cathode may be made with LiFePO₄. When the battery is charged, i.e. electrons are supplied to the anode, positively charged lithium ions migrate from the cathode **220** and intercalate into the CNT layer **212** (Fig. 4a). When the battery is discharged, positive lithium ions move back from the anode **210** to replace the missing charges in the cathode **220** (Fig. 4b). In either direction, the lithium ions diffuse through the electrolyte/separator **230**, which is composed of a separator layer **236** and electrolyte layers **232** and **234**.

### 2. Lithium metal battery structure

Figure 5 shows a structure of a rechargeable lithium metal battery **300** according to the present invention. Inside the battery **300**, the cathode **310** is made of a CNT layer **312** directly grown on a metal foil substrate **314**, and the anode **320** is made of a layer of lithium metal **322** and a metal foil charge collector layer **324**. When charging or discharging the battery, the lithium ions diffuse through the electrolyte/separator **330**.

### 3. Supercapacitor structure and combined battery/supercopacitor

Like regular capacitors, supercapacitors use the surface of the conductive plates for charge storage. The higher the surface area, generally the higher charge storage capacity. Therefore, high-surface-area CNTs are inherently suitable for use in the supercapacitors. In fact, many of the same materials as used in lithium metal/lithium ion batteries may be used in superpacitors.

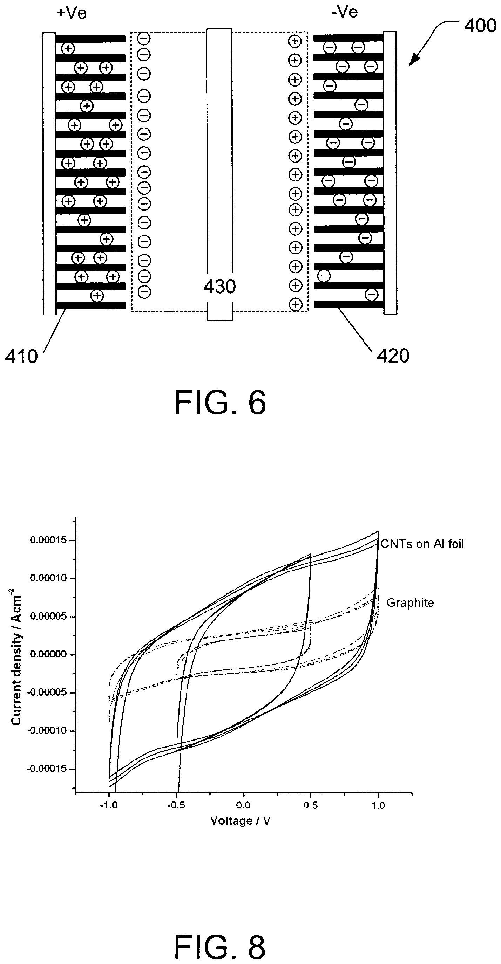

Figure 6 shows schematically a supercapacitor structure **400** according to the present invention. The structure comprises charge plates **410** and **420**, separated by a separator/electrolyte **430**. One or both of the charge plates **410** and **420** are composed of CNTs grown on a flexible metal foil for providing extremely high surface areas.

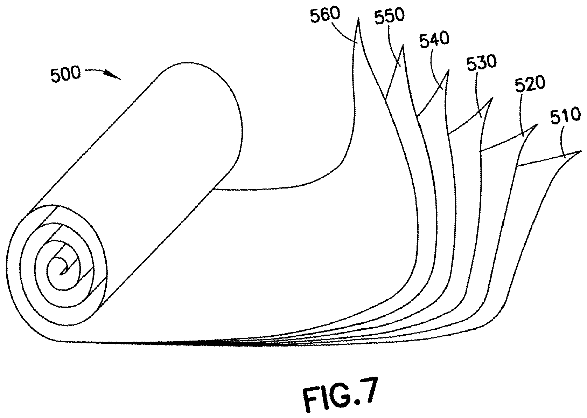

Figure 7 shows a particular example of the multi-layered energy storage structure of Fig. 3, in which, according to the present invention, at least one of the layers is a layer of CNTs grown on a metal foil. The structure **500** comprises a first layer of insulator **510,** a metal foil charge collector **520**, a layer of Li metal foil or lithium metal oxide **530,** a layer of separator integrated with solid state lithium electrolyte **540** as mentioned above, a layer of metal foil **550** with CNT structure directly grown thereon, wherein the CNT layer facing the electrolyte, and a second layer of insulator **560**. The width and length of the stack are much larger than its thickness.

A practical energy storage unit is made by folding or rolling up the stacked sheets. For this example, the multi layer stack **500** is rolled into a cylindrical shape. The roll is then hermetically sealed. Preferably, the fabrication process takes place in an inert gas environment that is oxygen-free (e.g. oxygen level not exceeding 5 ppm).

Figure 8 is exemplary cyclic voltammetry data of a supercapacitor made with CNTs grown on flexible Al foil, compared with the same supercapacitor made with a graphite plate. The data show that the supercapacitor made with the CNT layer can achieve much higher discharge current density.

In summary, the present invention provides a process for growing CNT nanostructure on a flexible metal foil substrate. The CNT nanostructure can be directly used in fabrication energy conversion and storage units suitable for portable electronic devices. Due to the extremely large surface area, aligned CNTs on a metal foils is very advantageous over traditional graphite electrodes.
The application can also be extended to photovoltaic devices and fuel cells which use the same electrode structure. In addition, other carbon nanostructured materials such as carbon nanohorns and carbon nano-onions can also be deposited directly on such flexible metal substrates. This process can further enable the roll-to-roll fabrication of nanostructured electrodes for industrialized mass production.

## Claims

1. A device (100), comprising:
a first sheet of a conductive material (110);
a sheet of an electrolyte (120) disposed on the first sheet of the conductive material (110); and
a second sheet of conductive material (130) disposed on the sheet of the electrolyte (120),
wherein at least one of the first sheet (110) and second sheet (130) comprises a metal foil layer and a carbon nanotube layer (10), the carbon nanotube layer (10) being arranged to face the sheet of the electrolyte (120), and wherein the carbon nanotube layer (10) is directly grown on the metal foil layer (20).

2. The device (100) of claim 1, wherein the first sheet (110), the sheet of the electrolyte (120) and the second sheet (130) form a multi-layered stack, and the device (100) further comprises a first insulating sheet and a second insulating sheet disposed on outer surfaces of the multi-layered stack, respectively.

3. The device (100) of claim 1 or 2, wherein the device (100) has much larger width and length than thickness, the device (100) is rolled up or folded and then hermetically sealed to form an energy storage unit.

4. The device (100) of claim 3, wherein the energy storage unit is a rechargeable battery or a capacitor, and the first and second conductive sheets are configured to be engaged with an external energy source or drain.

5. The device (100) of any preceding claim, wherein the metal foil (20) is one of the following: aluminum, copper, iron, and alloys of aluminum, copper or iron and/or wherein the metal foil (20) has a thickness of 5 to 100 micrometres.

6. The device (100) of any preceding claim, wherein the sheet of the electrolyte (120) comprises a sheet of microperforated plastic film and the electrolyte (120) disposed on surfaces of the plastic film.

7. The device (100) of claim 6, wherein the microperforated plastic film is a membrane made of polyethylene (PE) - polypropylene (PP).

8. The device (100) of claim 5 or 6, wherein the electrolyte (120) is a composite of a lithium salt and one of the following polymers: ethylene carbonate (EC), diethylene carbonate (DC) and propylene carbonate (PC) or the electrolyte (120) is a room temperature ionic liquid electrolyte.

9. The device (100) of any preceding claim, wherein the carbon nanotubes in the carbon nanotube layer (10) are at least partially aligned in a direction, said direction being at least nearly perpendicular to the surface of the metal foil (20).

10. The device (100) of any preceding claim wherein the carbon nanotube layer (10) is disposed on the metal foil layer and the electrolyte (120) is disposed on the carbon nanotube layer (10),

11. A method, comprising:
providing a first sheet of a conductive material (110);
disposing a sheet of an electrolyte (120) on the first sheet of the conductive material (110); and
disposing a second sheet of conductive material (130) on the sheet of the electrolyte (120),
wherein at least one of the first sheet (110) and the second sheet (130) comprises a metal foil layer (20) and a carbon nanotube layer (10), the carbon nanotube layer (10) being arranged to face the sheet of the electrolyte (120), and wherein the carbon nanotube layer (10) is directly grown on the metal foil layer (20).

12. The method of claim 11, wherein the carbon nanotube layer (10) is grown directly on the metal foil layer (20) by a process that comprises:
coating a catalyst on a surface of the metal foil (20) by low temperature evaporation of the catalyst;
annealing the catalyst coated metal foil (20) in ammonia gas at a first temperature; and
growing the carbon nanotubes (10) directly on the catalyst coated surface of the metal foil (20) in a hydrocarbon gas atmosphere at a second temperature,
wherein the first temperature is lower than the second temperature and the second temperature is no higher than 550°C.

13. The method of claim 12, wherein the metal foil (20) is one of the following:
aluminum, copper, iron, and alloys of aluminum, copper or iron and/or the metal foil (20) has a thickness of 5 to 100 micrometres.

14. The method of claim 12 or 13, wherein the catalyst comprises one of the following:
iron, nickel and cobalt and/or has a particle size of no more than 50 nanometers.

15. The method of any one of claims 12 to 14,wherein the carbon nanotube layer (10) are grown in a chemical vapor deposition system; wherein the carbon nanotubes (10) are grown to a length of 10 to 100 micrometres and/or wherein the carbon nanotubes (10) grown on the metal foil (20) are at least partially aligned in a direction, said direction being at least nearly perpendicular to the surface of the metal foil (20).

## Patentansprüche

1. Vorrichtung (100), umfassend:
eine erste Lage aus einem leitfähigen Material (110);
eine Lage aus einem Elektrolyten (120), die auf der ersten Lage des leitfähigen Materials (110) angeordnet ist; und
eine zweite Lage aus leitfähigem Material (130), die auf der Lage des Elektrolyten (120) angeordnet ist,
wobei wenigstens eine von der ersten Lage (110) und der zweiten Lage (130) eine Metallfolienschicht und eine Kohlenstoff-Nanoröhrchen-Schicht (10) umfasst, wobei die Kohlenstoff-Nanoröhrchen-Schicht (10) der Lage des Elektrolyten (120) zugewandt angeordnet ist und wobei die Kohlenstoff-Nanoröhrchen-Schicht (10) direkt auf der Metallfolienschicht (20) gewachsen ist.

2. Vorrichtung (100) gemäß Anspruch 1, wobei die erste Lage (110), die Lage des Elektrolyten (120) und die zweite Lage (130) einen mehrschichtigen Stapel bilden und die Vorrichtung (100) ferner eine erste isolierende Lage und eine zweite isolierende Lage umfasst, die jeweils an Außenoberflächen des mehrschichtigen Stapels angeordnet sind.

3. Vorrichtung (100) gemäß Anspruch 1 oder 2, wobei die Vorrichtung (100) eine viel größere Breite und Länge als Dicke aufweist, wobei die Vorrichtung (100) aufgerollt oder gefaltet und dann luftdicht verschlossen ist, um eine Energiespeichereinheit zu bilden.

4. Vorrichtung (100) gemäß Anspruch 3, wobei die Energiespeichereinheit eine wiederaufladbare Batterie oder ein Kondensator ist und die erste und die zweite Lage leitfähige dafür gestaltet sind, mit einer externen Energiequelle oder -senke verbunden zu werden.

5. Vorrichtung (100) gemäß einem der vorstehenden Ansprüche, wobei die Metallfolie (20) eines der folgenden ist: Aluminium, Kupfer, Eisen und Legierungen von Aluminium, Kupfer oder Eisen und/oder wobei die Metallfolie (20) eine Dicke von 5 bis 100 Mikrometer aufweist.

6. Vorrichtung (100) gemäß einem der vorstehenden Ansprüche, wobei die Lage aus dem Elektrolyten (120) eine Lage aus einem mikroperforierten Kunststofffilm und den Elektrolyten (120) auf Oberflächen des Kunststofffilms angeordnet umfasst.

7. Vorrichtung (100) gemäß Anspruch 6, wobei der mikroperforierte Kunststofffilm eine Membran bestehend aus Polyethylen(PE)-Polypropylen(PP) ist.

8. Vorrichtung (100) gemäß Anspruch 5 oder 6, wobei der Elektrolyt (120) ein Verbundstoff aus einem Lithiumsalz und einem der folgenden Polymere ist: Ethylencarbonat (EC), Diethylencarbonat (DC) und Propylencarbonat (PC), oder der Elektrolyt (120) ein bei Raumtemperatur ionischer, flüssiger Elektrolyt ist.

9. Vorrichtung (100) gemäß einem der vorstehenden Ansprüche, wobei die Kohlenstoff-Nanoröhrchen in der Kohlenstoff-Nanoröhrchen-Schicht (10) wenigstens teilweise in eine Richtung ausgerichtet sind, wobei die Richtung wenigstens beinahe senkrecht auf die Oberfläche der Metallfolie (20) steht.

10. Vorrichtung (100) gemäß einem der vorstehenden Ansprüche, wobei die Kohlenstoff-Nanoröhrchen-Schicht (10) auf der Metallfolienschicht angeordnet ist und der Elektrolyt (120) auf der Kohlenstoff-Nanoröhrchen-Schicht (10) angeordnet ist.

11. Verfahren, umfassend:
Bereitstellen einer ersten Lage aus einem leitfähigen Material (110);
Anordnen einer Lage aus einem Elektrolyten (120) auf der ersten Lage des leitfähigen Materials (110); und
Anordnen einer zweiten Lage aus leitfähigem Material (130) auf der Lage des Elektrolyten (120),
wobei wenigstens eine von der ersten Lage (110) und der zweiten Lage (130) eine Metallfolienschicht (20) und eine Kohlenstoff-Nanoröhrchen-Schicht (10) umfasst, wobei die Kohlenstoff-Nanoröhrchen-Schicht (10) der Lage des Elektrolyten (120) zugewandt angeordnet ist und wobei die Kohlenstoff-Nanoröhrchen-Schicht (10) direkt auf der Metallfolienschicht (20) gewachsen ist.

12. Verfahren gemäß Anspruch 11, wobei die Kohlenstoff-Nanoröhrchen-Schicht (10) durch ein Verfahren direkt auf der Metallfolienschicht (20) gewachsen ist, das umfasst:
Aufschichten eines Katalysators auf eine Oberfläche der Metallfolie (20) durch Tieftemperaturverdampfen des Katalysators;
Tempern der katalysatorbeschichteten Metallfolie (20) in Ammoniakgas bei einer ersten Temperatur; und
Aufwachsen der Kohlenstoff-Nanoröhrchen (10) direkt auf die katalysatorbeschichtete Oberfläche der Metallfolie (20) in einer Kohlenwasserstoffgas-Atmosphäre bei einer zweiten Temperatur,
wobei die erste Temperatur tiefer ist als die zweite Temperatur und die zweite Temperatur nicht höher ist als 550 °C.

13. Verfahren gemäß Anspruch 12, wobei die Metallfolie (20) eines der folgenden ist: Aluminium, Kupfer, Eisen und Legierungen von Aluminium, Kupfer oder Eisen und/oder wobei die Metallfolie (20) eine Dicke von 5 bis 100 Mikrometer aufweist.

14. Verfahren gemäß Anspruch 12 oder 13, wobei der Katalysator eines der folgenden umfasst: Eisen, Nickel und Kobalt und/oder eine Partikelgröße von nicht mehr als 50 Nanometer aufweist.

15. Verfahren gemäß einem der Ansprüche 12 bis 14, wobei die Kohlenstoff-Nanoröhrchen-Schicht (10) in einem chemischen Dampfabscheidungssystem gewachsen ist; wobei die Kohlenstoff-Nanoröhrchen (10) auf eine Länge von 10 bis 100 Mikrometer gewachsen sind und/oder wobei die Kohlenstoff-Nanoröhrchen (10), die auf der Metallfolie (20) gewachsen sind, wenigstens teilweise in eine Richtung ausgerichtet sind, wobei die Richtung wenigstens beinahe senkrecht auf die Oberfläche der Metallfolie (20) steht.

## Revendications

1. Dispositif (100), comprenant :
un premier feuillet d'un matériau conducteur (110) ;
un feuillet d'un électrolyte (120) disposé sur le premier feuillet du matériau conducteur (110) ; et
un second feuillet de matériau conducteur (130) disposé sur le feuillet de l'électrolyte (120),
dans lequel au moins l'un du premier feuillet (110) et du second feuillet (130) comprend une couche de feuille de métal et une couche de nanotubes de carbone (10), la couche de nanotubes de carbone (10) étant agencée pour faire face au feuillet de l'électrolyte (120), et dans lequel la couche de nanotubes de carbone (10) est mise à croître directement sur la couche de feuille de métal (20).

2. Dispositif (100) selon la revendication 1, dans lequel le premier feuillet (110), le feuillet de l'électrolyte (120) et le second feuillet (130) forment un empilement multicouche, et le dispositif (100) comprend en outre un premier feuillet isolant et un second feuillet isolant disposés sur des surfaces extérieures de l'empilement multicouche, respectivement.

3. Dispositif (100) selon la revendication 1 ou 2, dans lequel le dispositif (100) a une largeur et une longueur bien plus grandes que l'épaisseur, le dispositif (100) est enroulé ou plié puis scellé hermétiquement pour former une unité de stockage d'énergie.

4. Dispositif (100) selon la revendication 3, dans lequel l'unité de stockage d'énergie est une batterie rechargeable ou un condensateur, et les premier et second feuillets conducteurs sont configurés pour être engagés avec un drain ou une source d'énergie externe.

5. Dispositif (100) selon l'une quelconque des revendications précédentes, dans lequel la feuille de métal (20) est l'un des éléments suivants : l'aluminium, le cuivre, le fer, et des alliages d'aluminium, de cuivre ou de fer et/ou dans lequel la feuille de métal (20) a une épaisseur de 5 à 100 micromètres.

6. Dispositif (100) selon l'une quelconque des revendications précédentes, dans lequel le feuillet de l'électrolyte (120) comprend un feuillet de film plastique microperforé et l'électrolyte (120) étant disposé sur des surfaces du film plastique.

7. Dispositif (100) selon la revendication 6, dans lequel le film plastique microperforé est une membrane réalisée en polyéthylène (PE)-polypropylène (PP).

8. Dispositif (100) selon la revendication 5 ou 6, dans lequel l'électrolyte (120) est un composite d'un sel de lithium et de l'un des polymères suivants : le carbonate d'éthylène (EC), le carbonate de diéthylène (DC) et le carbonate de propylène (PC) ou l'électrolyte (120) est un électrolyte liquide ionique à température ambiante.

9. Dispositif (100) selon l'une quelconque des revendications précédentes, dans lequel les nanotubes de carbone dans la couche de nanotubes de carbone (10) sont au moins partiellement alignés dans une direction, ladite direction étant au moins quasiment perpendiculaire à la surface de la feuille de métal (20).

10. Dispositif (100) selon l'une quelconque des revendications précédentes, dans lequel la couche de nanotubes de carbone (10) est disposée sur la couche de feuille de métal et l'électrolyte (120) est disposé sur la couche de nanotubes de carbone (10).

11. Procédé, comprenant :
la fourniture d'un premier feuillet d'un matériau conducteur (110) ;
la disposition d'un feuillet d'un électrolyte (120) sur le premier feuillet du matériau conducteur (110) ; et
la disposition d'un second feuillet de matériau conducteur (130) sur le feuillet de l'électrolyte (120),
dans lequel au moins l'un du premier feuillet (110) et du second feuillet (130) comprend une couche de feuille de métal (20) et une couche de nanotubes de carbone (10), la couche de nanotubes de carbone (10) étant agencée pour faire face au feuillet de l'électrolyte (120), et dans lequel la couche de nanotubes de carbone (10) est mise à croître directement sur la couche de feuille de métal (20).

12. Procédé selon la revendication 11, dans lequel la couche de nanotubes de carbone (10) est mise à croître directement sur la couche de feuille de métal (20) par un processus qui comprend :
le revêtement d'un catalyseur sur une surface de la feuille de métal (20) par évaporation à basse température du catalyseur ;
le recuit de la feuille de métal revêtue de catalyseur (20) dans un gaz ammoniac à une première température ; et
la croissance de nanotubes de carbone (10) directement sur la surface revêtue de catalyseur de la feuille de métal (20) dans une atmosphère de gaz hydrocarbure à une seconde température,
dans lequel la première température est inférieure à la seconde température et la seconde température n'est pas supérieure à 550 °C.

13. Procédé selon la revendication 12, dans lequel la feuille de métal (20) est l'un des éléments suivants : l'aluminium, le cuivre, le fer, et des alliages d'aluminium, de cuivre ou de fer et/ou la feuille de métal (20) a une épaisseur de 5 à 100 micromètres.

14. Procédé selon la revendication 12 ou 13, dans lequel le catalyseur comprend l'un des éléments suivants : le fer, le nickel et le cobalt et/ou a une taille de particule de pas plus de 50 nanomètres.

15. Procédé selon l'une quelconque des revendications 12 à 14, dans lequel la couche de nanotubes de carbone (10) est mise à croître dans un système de dépôt chimique en phase vapeur ; dans lequel les nanotubes de carbone (10) sont mis à croître jusqu'à une longueur de 10 à 100 micromètres et/ou dans lequel les nanotubes de carbone (10) mis à croître sur la feuille de métal (20) sont au moins partiellement alignés dans une direction, ladite direction étant au moins quasiment perpendiculaire à la surface de la feuille de métal (20).
